Europäisches Patentamt

European Patent Office

Office européen des brevets

(11) Publication number: **0 429 273 A1**

# EUROPEAN PATENT APPLICATION

(21) Application number: 90312560.7

(22) Date of filing: 19.11.90

(51) Int. Cl.⁵: **E02D 31/00**

(30) Priority: 18.11.89 GB 8926116

(43) Date of publication of application:
29.05.91 Bulletin 91/22

(84) Designated Contracting States:
AT BE DE ES FR GB GR IT SE

(71) Applicant: TARMAC ECONOWASTE LIMITED
Millfields Road
Ettingshall, Wolverhampton WV4 6JP(GB)

(72) Inventor: Bennett, Keith Raymond
21, The Greenway Pattingham
Wolverhampton
West Midlands(GB)

(74) Representative: Harrison, Gordon Donald et al
FORRESTER & BOEHMERT
Widenmayerstrasse 4/I
W-8000 München 22(DE)

(54) Lining of landfill sites.

(57) The side face of a landfill site is lined by constructing inner and outer walls (21,22) from loosely assembled pieces of substantially inert material held in position adjacent to the side face of the site, for example by containing the material within stackable open-work containers (23), and arranging a liner (14') of flexible, pervious material, preferably sandwiched between protective layers of a soft material (25), between the inner and outer walls. The inner and outer walls (21,22) are thus freely pervious to gas and water so as to provide both ventilation and drainage, and the liner (14') is disposed substantially parallel to the side face of the site so as to avoid the possible formation of pockets capable of trapping gas or water.

FIG 3

## LINING OF LANDFILL SITES

Description of the Invention

This invention relates to the lining of landfill sites for receiving waste.

For enviromental reasons it is necessary to provide an impervious lining within disused quarries and other excavations used for tipping waste. Conveniently such lining comprises a flexible non-pervious liner. To ensure the long-term integrity of such flexible liner it is embedded in a layer of protective material, such as fine quarry material, typically about one meter thick. Such lining is required to extend across the bottom of the site and up the side faces of the site.

The conventional, so-called "Christmas Tree" method of lining the side faces involves firstly forming an inclined bank, usually known as a "bund", at the foot of the side faces with a slope of about one in three and extending the lining, comprising the liner and layer of protective materials from the bottom of the site up the sloping face of such bund and onto a generally flat top face thereof where the liner is temporarily anchored.

A first layer of waste is then deposited over the bottom of the site and over the sloping face of the bund. As the level of the deposited waste rises above the top face of the bund, the outer region of the deposited waste is formed into a sloping face which extends away from the side face, again at a slope of about one in three. When the waste layer extends to a depth of approximately twice the height of the original bund, the liner is then released from the temporary anchorage referred to above and folded back over the sloping outer face of the deposited waste and a further section of lining material is jointed as necessary. Over the sloping face of the bund and the sloping face of the deposited waste, the liner is embedded in a layer of protective material, as over the bottom of the site.

The trough which then exists between the side face and the completed first layer of waste is then filled in with rubble or other suitable material to form a second bund, again with a sloping face of about one in three, and the new section of liner is laid over the sloping face and temporarily secured as before on the flat top face of the new bund, again embedded in protective material throughout.

This process is then repeated to form a series of bunds throughout the height of the side face until the infill operation is completed, the liner following a zig-zag course at a position inwardly offset from the side face of the infill site.

This conventional method of lining the side face suffers from a number of disadvantages.

In particular, the bunds occupy a quite significant volume which is therefore not available for accommodating waste, with consequent reduction in the commercial value of the operation. To put this in perspective, it must be realised that typically a bund may have a height of some 2 to 3 metres, with a flat top approximately 2 metres wide from the side face, and with an overall width at the maximum point of some 8 to 11 metres. Thus, the total volume occupied by the bunds is quite significant, and obviously increases with the size of the landfill site, and reduces the total capacity of the site for waste by several hundred or even thousand loads from which income could otherwise be obtained.

The zig-zag configuration of the side face lining is also potentially a problem in that it defines pockets in which gases may accumulate and it makes it difficult to make provision for monitoring the generation of gas because it is not possible to gain access to such pockets from above without penetrating the lining.

Further, whilst the liner is embedded in a thick layer of protective material, it may nevertheless be susceptible to damage as a result of settlement which inevitably occurs over a period of years. Typically, allowance is made for settlement of 10 to 15 percent on average, but due to the varying nature of waste deposited at the site, settlement is not uniform, so that there can be substantial distortion of the lining, with consequent risk of rupture.

The present invention concerns an improved form of lining for a landfill site which can to a large extent overcome the above problems and which also has further advantages as will be apparent hereinafter.

According to the invention we provide a method of lining the side faces of a landfill site wherein a flexible impermeable liner is located between inner and outer walls which are constructed from loosely assembled pieces of substantially inert material held in position adjacent to the side face of the site.

Typically, the material used is stone or rock in pieces having dimensions from about 5 to 10 centimetres upwards. Such material is not susceptible to compaction and is freely pervious to gas and water so as to provide both ventilation and drainage.

Such stone or rock is preferably held in open-work containers, such as the type generally known as "gabions" which essentially comprise large baskets of wire mesh. Such gabions are dimensionally stable, stackable containers that may accordingly be used as building "blocks" for the construction of the inner and outer walls in well known manner.

The liner itself may comprise a conventional flexible, impervious synthetic material and is preferably sandwiched between protective layers of a softer sheet material, such as textile material.

The invention will now be described by way of example with reference to the accompanying drawings wherein:-

FIGURE 1 is a schematic section through a landfill site with a liner constructed in accordance with the prior art;

FIGURE 2 is a similar view showing the liner in accordance with the invention: and

FIGURE 3 is an enlarged fragmentary view in accordance with the invention in the region at the junction between the bottom and side face of the landfill site.

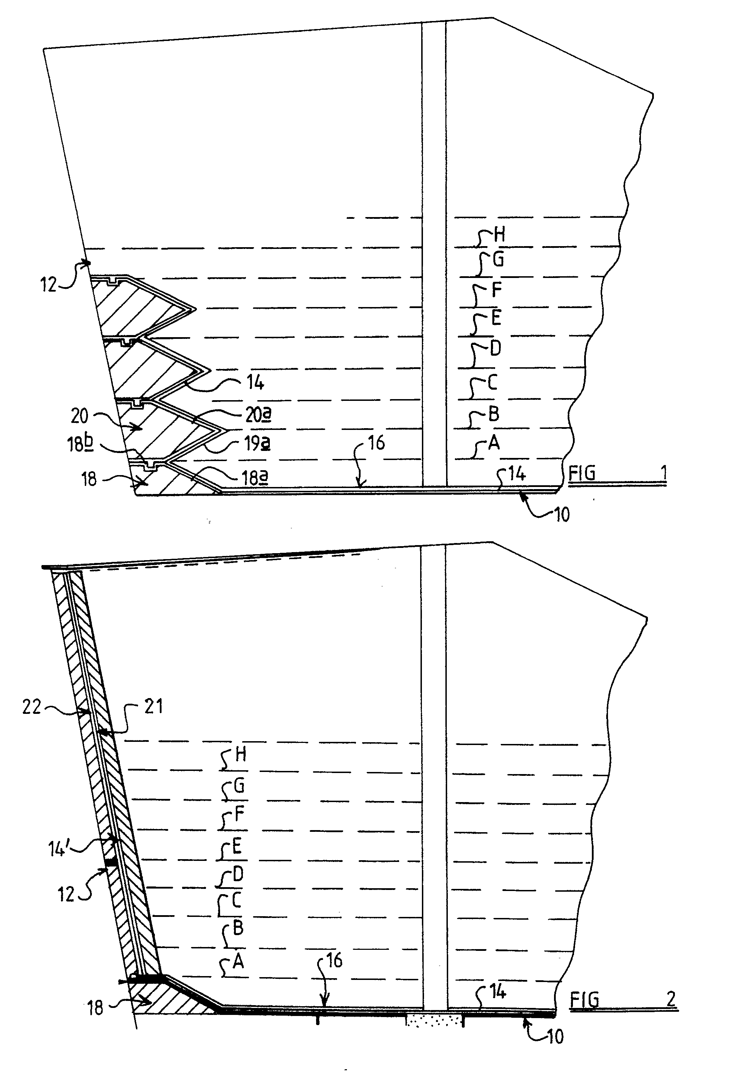

As illustrated in Figure 1, according to the prior art a landfill site including a levelled bottom surface 10 and a generally vertical side face 12 is provided with a liner 14 comprising appropriate, flexible, impervious plastics sheet material which is embedded within a layer 16, approximately 1 metre thick, of a protective, particulate material. The liner 14 and layer 16 extend in a flat manner across the bottom surface 10 and, as illustrated, in a zig-zag manner up the side face 12.

This is achieved by forming a bund 18 of any appropriate, inert material at the junction between the bottom surface 10 and the side face 12 and affording an upwardly and outwardly inclined face 18a and a generally flat top surface 18b, suitably contouring the deposited waste material to define an upwardly and inwardly inclined face 19a, and then forming a second bund 20 with an upwardly and outwardly inclined face 20a, and so on up to the top of the side face 12 in a manner previously mentioned as successive layers A -H of waste are laid down.

The volume occupied by the bund material, as shown shaded in Figure 1 is, as previously explained, quite significant, and the volumes bounded by the liner 14 adjacent to the inclined faces 18a and 19a etc such as methane, generated by the waste material especially when subject to distortion as a result of differential settlement can serve to accumulate gas.

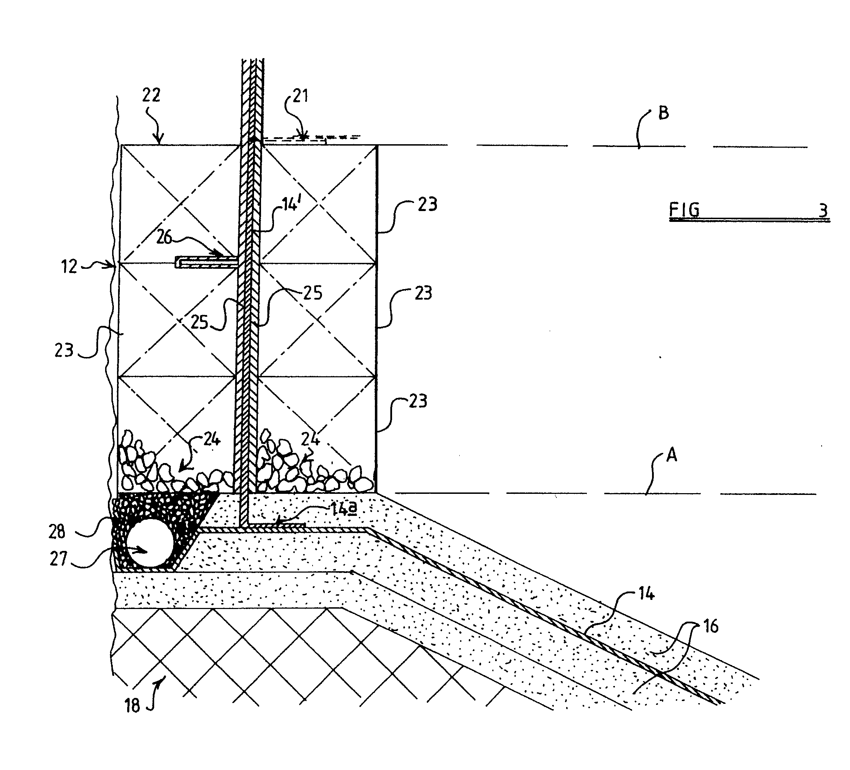

By contrast, in accordance with the present invention, as illustrated in Figure 2 in which the same reference numerals are used where appropriate, the liner 14′ extends substantially straight up the side face 12. This is achieved by confining it between inner and outer walls 21 and 22 formed from generally loosely assembled rocks or other similar inert, substantially non-compactible material.

This results in a substantial saving in the quantity of liner material required, e.g. up to as much as 60 percent substantially eliminates the need to obtain and transport to the infill site the significant quantities of bund material previously required, and significantly reduces the unusable volume of the site since the volume occupied by the walls 21 and 22 is very much less than that defined by the bunds 20 in the prior art construction as illustrated in Figure 1. In addition the use of less lining material reduces the number of joints required; potentially the weakest part of the liner.

Most conveniently, the walls 21 and 22 are formed as illustrated in Figure 3 by stacking gabions 23 containing rocks 24. The inner and outer walls 21 and 22 are thus of a generally pervious construction which facilitates upward flow of gas and downward drainage of water on both sides of the liner.

The vertical part 14′ of the liner may be welded as indicated at 14a to the bottom liner 14 within the protective layer 16 and may be sandwiched between protective layers of textile material 25, for example of the kind known as "geotextile", i.e. a fabric of a known kind which is resistant to abrasion and puncture, such as a punched fabric, a mesh or a net material.

To construct the liner in accordance with the invention, gabions 23 containing rocks 24 or the like are first assembled against the side face 12 to form an outer wall 22, up to a predetermined height corresponding to the intended depth of the layer of the waste material to be deposited. In a typical case, the gabions may be approximately 1 cubic metre in size and may initially be stacked three-high. In order to hold the liner in place preparatory to the construction of the first part of the inner wall 21 as hereinafter described, the vertical part 14 of the liner may have additional strips 26 of the same material welded thereto at intervals, such strips being located between vertically superposed gabions and cushioned by layers of the textile material 25. The corresponding part of the inner wall 21 may then be constructed against the textile material 25. Additional pieces of liner may be joined to the installed portion of the liner as necessary as the height of the deposited waste increases, the outer and inner walls 22 and 21 likewise being built up in turn in successive stages corresponding to successive layers B-H of waste.

Not only does the method of lining the side face 12 in accordance with the invention require the use of less liner material and use up less of the available volume of the site than the prior art method, but it also has additional advantages.

The walls 21 and 22 being made of rock or stone are essentially of a pervious nature and offer no significant resistance to the escape of gas upwardly, or to the drainage of water downwardly, neither of which is easily attainable in the conventional construction as illustrated in Figure 1. Substances leached out from the deposited waste by the percolation of water are confined by the liner 14, but due to the nature of the inner wall 21 can readily flow downwardly to the base of the site so as to be extracted by means of conventional drainage systems (not shown) provided at the bottom of the site. Moreover, due to the easy drainage, relatively little leachate is likely to reach vertical part 14' of the liner, except at the base of the inner wall 21.

Similarly, gas which might otherwise have accumulated between the folds of the zig-zag liner as shown in Figure 1 can freely escape upwardly through the porous structure of the inner wall 21.

The porous structure of the outer wall 22 also ensures adequate drainage of external water which may percolate into the site from the surrounding strata, thereby reducing the risk of pressure build up on the outside of the liner. For this purpose, at the base of the outer wall 22 a drainage pipe 27 may be provided in a trough 28 filled with granular stone or other similar material.

Should the vertical part of the liner become breached, any gas which thereby escapes can readily be vented upwardly, and any leachate can drain downwardly through the porous structure of the outer wall 22, thereby significantly reducing the risk, present with the prior art method, of penetration of such leachate and gas into the surrounding strata. In addition leachate which drains into the drainage pipe 27 can easily be collected for disposal.

Another advantage of the invention is that in the event of a major breach of the liner it would be possible to pressure grout the voids in the outer gabion wall 22 thereby re-sealing the impermeable barrier between the waste and the surrounding strata.

Whilst it is most convenient to construct the inner and outer walls 21 and 22 from rocks contained in gabions, it will be appreciated that other, similar materials, such as stones, gravel, pieces of concrete, rubble or the like, or mixtures of such materials could be used, and means other than gabions could be employed for holding such material in loosely assembled relation, for example the outer wall could be constructed using wire mesh nets or the like secured to the side face 12 in any appropriate manner.

A further advantage of the construction in accordance with the invention is that because the vertical part 14' of the liner follows a substantially straight upward course, it is possible to make provision for the insertion of probes down through the walls 21 and 22 on either side of the liner for the purpose of taking samples of, and temporarily or permanently monitoring gas or leachate at various points thereby overcoming the need to provide expensive engineering alternatives. To facilitate this, the walls could incorporate vertically extending pipes or ducts. This could be achieved by placing appropriately dimensioned pipes in selected gabions, or by forming selected gabions with an internal wall, for example a cylinder of wire mesh, to define a central, vertical space which is surrounded by the material contained in the gabion. Such arrangements would facilitate the lowering of appropriate sampling instruments as and when required, or the permanent installation of such instruments where necessary. In addition it may be possible to utilise such pipes as part of a permanent gas extraction system from the site if desired.

Whilst in Figures 2 and 3, a bund 18 is shown at the base of the side face 12 of the site, it will be appreciated that this may not always be needed, for example where the site has a base which slopes away from the side face, and does not form part of the present invention. Likewise the drainage pipe 27 may not always be required, depending on the nature of the particular site.

## Claims

1. A method of lining the side faces of a landfill site wherein a flexible impermeable liner is located between inner and outer walls which are constructed from loosely assembled pieces of substantially inert material held in position adjacent to the side face of the site.

2. A method according to Claim 1 wherein the material used in the construction of the walls is of a kind which is not susceptible to compaction.

3. A method according to Claim 2 wherein the material consists at least in part of stone, rock, rubble or other similar material.

4. A method according to Claim 2 wherein the material of which the walls are constructed consists at least in part of gravel or other similar material.

5. A method according to anyone of the preceding claims wherein said material is held in open-work containers.

6. A method according to Claim 5 wherein said containers comprise gabions which are designed to stack on one another in a stable relation.

7. A method according to anyone of the preceding claims wherein the flexible impermeable liner is sandwiched between layers of a protective sheet material.

8. A method according to Claim 7 wherein said sheet material comprises a textile material.

9. A method according to anyone of Claims 5 to 8 wherein the flexible impervious liner has strips of the same material secured thereto for location between said containers which are arranged in vertically superposed relation.

10. A method according to anyone of Claims 5 to 9 wherein at least some of said containers afford a vertically arranged duct which is free of said substantially inert material.

FIG 1

FIG 2

FIG 3

EP 0 429 273 A1

European
Patent Office

**EUROPEAN SEARCH
REPORT**

Application Number

**EP 90 31 2560**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 464 081   (HILLIER)<br>* Column 8, line 3 - column 9, line 32; figures 1,2,6 *<br>– – – | 1,2 | E 02<br>D 31/00 |
| A | | 3,4 | |
| A | US-A-4 696 599   (RAKOCZYNSKI)<br>* Column 7, line 31 - column 8, line 68; figures 2,3 *<br>– – – | 1-4,7,8 | |
| A | FR-A-1 243 849   (NEYRPIC)<br>* Entire document *<br>– – – | 1-6 | |
| A | FR-E-8 882 5   (JACOBSON)<br>* Page 2, left-hand column, line 1 - right-hand column, line 11; figures 4-5 *<br>– – – – – | 1-4 | |

TECHNICAL FIELDS
SEARCHED (Int. Cl.5)

E 02 D
E 02 B
B 09 B
E 04 H

The present search report has been drawn up for all claims

| Place of search | Date of completion of search | Examiner |
|---|---|---|
| The Hague | 18 February 91 | TELLEFSEN J.J. |